# EUROPEAN PATENT SPECIFICATION

(11) **EP 0 962 138 B1**
(45) Date of publication and mention of the grant of the patent: **14.03.2007**
(21) Application number: 98303562.7
(22) Date of filing: 07.05.1998
(51) Int. Cl.: A01N 47/02, A01N 43/56

(54) **Pesticidal method**
Verfahren zur Schädlingsbekämpfung
Méthode pesticide

(43) Date of publication of application: 08.12.1999
(73) Proprietor: BASF Agro B.V., Arnhem (NL), Wädenswil-Branch, 8820 Wädenswil/Au (CH)
(72) Inventor: Lankford, William Timothy, Ongar, Essex, CM5 0HW (GB); Parsons, Richard, Manningtree, Essex, CO11 2NF (GB)
(74) Representative: Bentham, Stephen

(56) References cited:
- EP-A- 0 295 117
- EP-A- 0 412 849
- EP-A- 0 500 209
- FR-A- 2 696 905
- DATABASE CROPU STN-International STN-accession no. 96-85841, N.G.H.DOLMANS ET AL.: "Prospects for chemical control of black vine weevil (Otiorhynchus sulcatus) in nursery stock" XP002075198 & MITT.BIOL.BUNDESANST.LANDFORSTWIRTSCH., no. 316, 1996, pages 108-112,
- DATABASE CROPU STN-International STN-accession no. 96-86803, L.K.TANIGOSHI ET AL.: "Root wevil control on strawberry" XP002075199 & ARTHROPOD MANAGE.TESTS, vol. 21, no. 68, 1996,
- DATABASE CROPU STN-International STN-accession no. 96-86804, L.K.TANIGOSHI ET AL.: "Root weevil control on strawberry, 1995" XP002075200 & ARTHROPOD MANAGE.TESTS, vol. 21, no. 68, 1996,
- DATABASE CROPU STN-International STN-accession no. 96-83703, J.V.CROSS ET AL.: "Chemical control of vine weevil larvae on container-grown hardy ornamental nursery stock 1986-8" XP002075201 & ANN.APPL.BIOL., vol. 127, no. 3, 1995, pages 533-542,
- DATABASE CROPU STN-International STN-accession no. 97-89088, J.V.CROSS ET AL.: "Localised insecticide treatment for the control of vine weevil larvae (Otiorhynchus sulcatus) on field grown strawberry" XP002075202 & CROP PROT., vol. 16, no. 6, 1997, pages 565-574,
- DATABASE CABA STN-International STN-accession no.97-129165, J.VOSTREL: "Hop protection against alfalfa snout weevil (Otiorhynchus ligustici L.) in Czech hop-gardens" XP002075203 & ROSTLINNA VYROBA, vol. 43, no. 7, 1997, pages 333-335,

## Description

The present invention relates to a new pesticidal method for the control of weevils, e.g. *Otiorynchus sulcatus.*

It is presently known that weevils, such as *Otiorynchus sulcatus* (also known as Black Vine Weevil) are destructive pests in agriculture and horticulture. The insects may inhabit potted plants which are available at commercial horticultural markets. A problem to overcome in the control of these insects in horticultural markets is actually detecting the presence of the larvae of the insects. Although detection of adults may be readily done by observing feeding damage on the leaves, damage by larvae is particularly insidious and difficult to detect because the larvae damage the plants by destroying the roots. Thus by the time damage is detected the plant may not have a reasonable chance to recover after treatment.

An object of the invention is the control of weevils, such as *Otiorynchus sulcatus* and others mentioned hereinafter.

Another object of the invention is the prevention of damage by weevils, such as *Otiorynchus sulcatus,* to plants, e.g. ornamental plants.

These objects are met in whole or in part by the instant invention.

The present invention provides a method of providing long term protection of a plant, eg an ornamental plant, a soft fruit plant (e.g. strawberry or raspberry) or pine, from weevils which method comprises incorporating in a growing medium in which the plant is growing or is to be grown an insecticidally effective amount of a 1-arylpyrazole of formula (I): 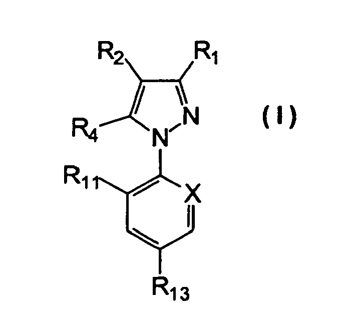 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R₆, -C(O)OR₇, -S(O)ₘR₇, alkyl, haloalkyl, -OR₈, -N=C(R₉)(R₁₀) and -C(O)alkyl;
R₅ and R₆ are independently selected from a hydrogen atom, alkyl, haloalkyl, -C(O)alkyl, -C(O)OR₇, -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen, hydrogen, CN and NO₂;
R₁₃ is selected from halogen, haloalkyl, haloalkoxy, -S(O)_{q}CF₃ and -SF₅;
m, n, q, r are independently selected from 0, 1, and 2;
provided that when R₁ is methyl, R₃ is haloalkyl, R₄ is NH₂, R₁₁ is Cl, R₁₃ is CF₃, and X is N and provided that when R₂ is 4,5-dicyanoimidazol-2-yl, R₄ is Cl, R₁₁ is Cl, R₁₃ is CF₃, and X is =C-Cl.

The alkyl and alkoxy groups and moieties thereof of the formula (I) are preferably lower alkyl and alkoxy groups, that is, groups having one to six carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It shall be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It will be understood that the 1-arylpyrazoles of formula (I) include enantiomers and/or diastereomers thereof and mixtures thereof.

A preferred group of 1-arylpyrazoles for use in the present invention are those of formula (I) with one or more of the following features wherein:
R₁ is CN;
R₄ is -NR₅R₆;
R₅ and R₆ are independently selected from the hydrogen atom, alkyl, haloalkyl, C(O)alkyl, C(O)OR₇;
X is C-R₁₂; or
R₁₃ is selected from a halogen atom, haloalkyl, haloalkoxy, and -SF₅.

Another preferred group of 1-arylpyrazoles of formula (I) for use in the present invention is that wherein:
R₁ is CN;
R₃ is a haloalkyl radical;
R₄ is NH₂;
X is C-R₁₂;
R₁₁ and R₁₂ represent, independently of one another, a halogen atom; and
R₁₃ is a haloalkyl radical.

A most preferred compound is 5-amino-1-(2,6-dichloro 4-trifluoromethyl phenyl) 4-trifluoromethylsulfinyl-3-cyanopyrazole, hereafter designated as compound (A).

Compounds of formula (I) may be prepared according to known processes, for example as described in International Patent Publications WO 87/3781, 93/6089, and 94/21606 as well as in European Patent Applications 295117, 403300, 385809 or 679650, German Patent Publication 19511269 and United States Patents 5232940 and 5236938 or other process according to the knowledge of a man skilled in the art of chemical synthesis, which is deemed to include Chemical Abstracts and the literature referred to therein, Compositions comprising the compounds of formula (I) may also be prepared according to the teaching of the same prior art or similar publications.

The weevils may be of the Otiorynchus or Hylobius family, e.g. Otiorynchus sulcatus, Otiorynchus ovatus (European strawberry) weevil, Otiorynchus singularis which attack soft fruit plants (e.g. strawberry and raspberry) and Hylobius abietis (pine weevil).

By the term "growing medium" is meant a substance in which, for example, the plant or the seed from which it grows may germinate and develop or into which it may be translated. Generally growing medium comprises compost, peat or potting soil. To facilitate even distribution of the 1-arylpyrazole in the growing medium, it may be applied to one or more components e.g. sand, perlite or water-retaining granules of the growing medium before that component is incorporated into the growing medium. The content of 1-arylpyrazole in the treated component may be adjusted to provide the desired final concentration after mixing all the components of the growing medium.

The 1-arylpyrazole may be used in conjunction with other active ingredients, for example a plant feed or plant growth regulator. Compositions comprising a plant feed or plant growth regulator, a 1-arylpyrazole of general formula (I) and, optionally, a carrier and/or a surface active agent may also be used in the method of the invention.

The amount of the 1-arylpyrazole is from 0.01 g/m³ to 10 g/m³ of 1-arylpyrazole per volume of growing medium, preferably from 0.2 g/m³ to 5 g/m³, more preferably from 0.25 to 1 g/m³.

The method of the invention is preferably applied to plants grown in containers, for example pots, nets or other flexible material which contains the growing medium.

The incorporation of the 1-arylpyrazole is generally effected by a suitable means known to those skilled in the art. It is generally preferred to apply the 1-arylpyrazole as a particulate solid composition or a liquid composition to the growing medium. It is more preferable to apply the 1-arylpyrazole as a particulate solid composition in order to minimize the effective amount and more evenly distribute the active ingredient in the growing medium.

In general the method of the instant invention is used preventatively: that is, the application of the 1-arylpyrazole is used to prevent or reduce attack by weevils such as *Otiorynchus sulcatus* on a plant. However, the invention may also be used curatively in that a planting medium infested with weevils such as *Otiorynchus sulcatus* or others mentioned above may be treated to kill a substantial majority of the insects after the plant has been affected. Generally in a curative treatment, it is preferred to apply the 1-arylpyrazole as a liquid composition to penetrate the planting medium quickly.

The method of the invention may be used to provide long-term protection for plants, including ornamental plants, from weevils such as *Otiorynchus sulcatus*. Generally, the method of the invention provides protection of from 0.1 years to 5 years, preferably from 0.3 years to 3 years, most preferably from 0.5 years to 2 years.

The following Examples illustrate the invention:

### Example 1:

In a twenty-replicate test, Compound A was incorporated in compost by mixing a 2% w/w granule with the compost (*Klasmann Substrat 2* (Peat based) ) using a small mechanical mixer. Plants of *Thuya plicata* Atrovirens were potted in the compost and allowed to grow for two months and then about 15 eggs of *Otiorynchus sulcatus* were added to the soil and covered with a small layer of compost. As a comparison, some compost was untreated and other compost was treated with the standard chlorpyrifos in the form of the commercial product suSCon Green®. After 27 days the soil was reinfested with 15 more eggs. The plant pots were enclosed such that the plants were exposed to light and the adult beetles which emerged could not escape.

Of the twenty replicates of each test, five were assessed after 6 months and fifteen were assessed after 18 months for numbers of larvae and adults. After 6 months the following results were observed:

| Compound | Dose g/m³ | Total # larvae | Number per pot | % Control |
|---|---|---|---|---|
| Untreated | 0 | 31 | 3.1 | 0 |
| A | 2.5 | 0 | 0 | 100 |
| A | 5 | 0 | 0 | 100 |
| A | 7.5 | 0 | 0 | 100 |
| A | 15 | 0 | 0 | 100 |
| Chlorpyrifos | 75 | 4 | 0.8 | 87 |

The following results were obtained after 18 months:

| Compound | Dose g/m³ | Total Dead Plants | % Survival of Plants | Total # larvae | Number per pot | % Control |
|---|---|---|---|---|---|---|
| Untreated | 0 | 7 | 72 | 51 | 3.1 | 0 |
| A | 2.5 | 0 | 100 | 0 | 0 | 100 |
| A | 5 | 0 | 100 | 0 | 0 | 100 |
| A | 7.5 | 0 | 100 | 0 | 0 | 100 |
| A | 15 | 0 | 100 | 0 | 0 | 100 |
| Chlorpyrifos | 75 | 0 | 100 | 47 | 3.1 | 0 |

### Example 2

In 20-replicate tests, *Fuchsia triphylla* hybrid cv. Koralle was infested with 15 eggs per pot of vine weevil. Compound A in the form of an 80% water dispersible granule (Regent 800 WG) was suspended in water and added to each pot at the indicated rate per surface area of the pot at various dilutions. After 6 months, the trials were assessed. Compound A protected the plants substantially better than the commercial standard fonofos in a curative treatment.

**Drench Treatments**

| Trt. No. | | Dose mg m⁻² | in litre | Total no. of larvae | Number per pot | **Control** |
|---|---|---|---|---|---|---|
| 1 | Untreated Control | | | **44** | **2.**2 | |
| | | | | | | |
| 2 | *REGENT 800WG* | 1.25 | 5 | 25 | 1.25 | **43%** |
| 3 | *REGENT 800WG* | 1.25 | 10 | 30 | 1.5 | **32%** |
| 4 | *REGENT 800WG* | 1.25 | 20 | 12 | 0.6 | **73%** |
| 5 | *REGENT 800WG* | 2.5 | 5 | 10 | 0.5 | **77%** |
| 6 | *REGENT 800WG* | 2.5 | 10 | 18 | 0.9 | **59%** |
| 7 | *REGENT 800WG* | 2.5 | 20 | 10 | 0.5 | **77%** |
| 8 | *REGENT 800WG* | 5 | 5 | 8 | 0.4 | **82%** |
| 9 | *REGENT 800WG* | 5 | 10 | 11 | 0.55 | **75%** |
| 10 | *REGENT 80OWG* | 5 | 20 | 15 | 0.75 | **66%** |
| 11 | *REGENT 80OWG* | 10 | 10 | 5 | 0.25 | **89%** |
| | | | | | | |
| *12* | *Cudgel* **ml** *(fonofos)* | 2.5 | 10 | 32 | 1.6 | **27%** |

## Claims

1. A method of providing long-term protection of a plant from attack by weevil of the *Otiorynchus* or *Hylobius* family which method comprises incorporating in a growing medium, at a rate of from 0.01 g/m³ to 10 g/m³ per volume of growing medium in which the plant is growing or is to be grown, a 1-arylpyrazole of formula (I): 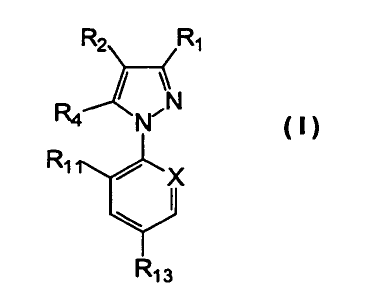 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R₆, -C(O)OR₇, -S(O)ₘR₇, alkyl, haloalkyl, -OR₈,-N=C(R₉)(R₁₀) and -C(O)alkyl;
R₅ and R₆ are independently selected from a hydrogen atom, alkyl, haloalkyl, -C(O)alkyl, -C(O)OR₇, -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen, hydrogen, CN and NO₂;
R₁₃ is selected from halogen, haloalkyl, haloalkoxy, -S(O)_{q}CF₃ and -SF₅;
m, n, q, r are independently selected from 0, 1, and 2;
provided that when R₁ is methyl, R₃ is haloalkyl, R₄ is NH₂, R₁₁ is Cl, R₁₃ is CF₃, and X is N and provided that when R₂ is 4,5-dicyanoimidazol-2-yl, R₄ is Cl, R₁₁ is Cl, R₁₃ is CF₃, and X is =C-Cl.

2. A method according to claim 1 wherein the weevil is *Otiorynchus sulcatus, ovatus* or *singularis,* or *Hylobius abietis.*

3. A method according to claim 1 or 2 wherein the 1-arylpyrazole is applied at from 0.2 g/m³ to 5 g/m³ of active ingredient per volume of growing medium.

4. A method according to any one of the preceding claims wherein the growing medium comprises compost, peat or potting soil.

5. A method according to any one of the preceding claims wherein the 1-arylpyrazole is applied as a particulate solid composition to the growing medium.

6. A method according to any one of claims 1 to 4 wherein the 1-arylpyrazole is applied as a liquid composition to the growing medium.

7. A method according to any one of the preceding claims wherein the 1-arylpyrazole is 5-amino-1-(2,6-dichloro 4-trifluoromethyl phenyl) 4-trifluoromethylsulfinyl-3-cyanopyrazole.

## Patentansprüche

1. Verfahren der Bereitstellung von langfristigem Schutz einer Pflanze vor Angriff durch Rüsselkäfer der Familie *Otiorhynchus* oder *Hylobius,* wobei das Verfahren das Einbringen von 1-Arylpyrazol der Formel (I): 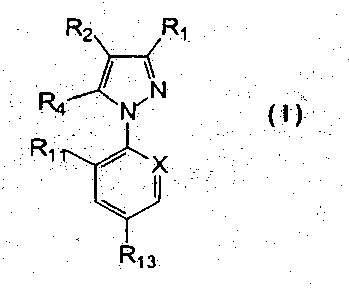 in ein Wachstumsmedium in einer Menge von 0,01 g/cm³ bis 10 g/m³ pro Volumen an dem Wachstumsmedium, in dem die Pflanze wächst oder wachsen soll, umfasst, worin:
R₁ CN oder Methyl oder ein Halogenatom ist;
R₂S(O)ₙR₃ oder 4,5-Dicyanoimidazol-2-yl oder Halogenalkyl ist;
R₃ Alkyl oder Halogenalkyl ist;
R₄ ausgewählt ist aus der Gruppe bestehend aus Wasserstoff, Halogen, -NR₅R₆, -C(O)OR₇, -S(O)ₘR₇, Alkyl, Halogenalkyl, -OR₈, -N=C(R₉)(R₁₀) und -C(O)-Alkyl;
R₅ und R₆ unabhängig voneinander ausgewählt sind aus einem Wasserstoffatom, Alkyl, Halogenalkyl, -C(O)-Alkyl, -C(0)OR₇, -S(O)ᵣCF₃; oder R₅ und R₆ zusammen ein zweiwertiges Alkylenradikal bilden, das durch ein oder mehrere Heteroatome unterbrochen sein kann, die vorzugsweise ausgewählt sind aus Sauerstoff, Stickstoff und Schwefel;
R₇ ausgewählt ist aus Alkyl und Halogenalkyl;
R₈ ausgewählt ist aus Alkyl, Halogenalkyl und Wasserstoff;
R₉ ausgewählt ist aus Wasserstoff und Alkyl;
R₁₀ ausgewählt ist aus Phenyl und Heteroaryl, die jeweils nicht-substituiert oder mit einem oder mehreren aus Hydroxyl, Halogen, -O-Alkyl, -S-Alkyl, Cyano oder Alkyl oder deren Kombinationen substituiert sind;
X ausgewählt ist aus Stickstoff und -C-R₁₂;
R₁₁ und R₁₂ unabhängig voneinander ausgewählt sind aus Halogen, Wasserstoff, CN und NO₂;
R₁₃ ausgewählt ist aus Halogen, Halogenalkyl, Halogenalkoxy, -S(O)qCF₃ und -SF₅; m, n, q, r unabhängig voneinander ausgewählt sind aus 0, 1 und 2;
vorausgesetzt, dass wenn R₁ Methyl ist, R₃ Halogenalkyl ist, R₄ NH₂ ist, R₁₁ Cl ist, R₁₃ CF₃ ist und X N ist, und vorausgesetzt, dass wenn R₂ 4,5-Dicyanoimidazol-2-yl ist, R₄ Cl ist, R₁₁ Cl ist, R₁₃ CF₃ ist und X =C-Cl ist.

2. Verfahren gemäß Anspruch 1, wobei der Rüsselkäfer *Otiorhynchus sulcatus, ovatus* oder *singularis,* oder *Hylobius abietis* ist.

3. Verfahren gemäß Anspruch 1 oder 2, wobei das 1-Arylpyrazol in einer Menge von 0,2 g/m³ bis 5 g/m³ an aktivem Bestandteil pro Volumen an dem Wachstumsmedium angewendet wird.

4. Verfahren gemäß einem der vorhergehenden Ansprüche, wobei das Wachstumsmedium Kompost, Torf oder Blumenerde umfasst.

5. Verfahren gemäß einem der vorhergehenden Ansprüche, wobei das 1-Arylpyrazol als eine partikuläre feste Zusammensetzung dem Wachstumsmedium beigegeben wird.

6. Verfahren gemäß einem der Ansprüche 1 bis 4, wobei das 1-Arylpyrazol als eine flüssige Zusammensetzung dem Wachstumsmedium beigegeben wird.

7. Verfahren gemäß einem der vorhergehenden Ansprüche, wobei das 1- Arylpyrazol 5-Amino-1-(2,6-dichlor-4-trifluormethylphenyl)-4-trifluormethylsulfinyl-3-cyanopyrazol ist.

## Revendications

1. Procédé pour conférer à une plante une protection de longue durée contre l'attaque par un charançon du genre *Otiorynchus* ou *Hylobius,* procédé qui comprend l'incorporation à un milieu de croissance, à un taux de 0,01 g/m³ à 10 g/m³ par volume de milieu de croissance dans lequel la plante se développe ou est destinée à être cultivée, d'un 1-arylpyrazole de formule (I) : 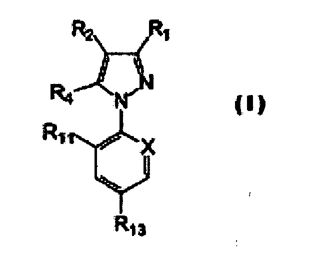 dans laquelle
R₁ représente un groupe CN ou méthyle ou un atome d'halogène ;
R₂ représente un groupe S(O)ₙR₃ ou 4,5-dicyano-imidazole-2-yle ou halogénalkyle ;
R₃ représente un groupe alkyle ou halogénalkyle ;
R₄ est choisi dans le groupe consistant en un atome d'hydrogène, un atome d'halogène, des groupes -NR₅R₆, -C(O)OR₇, -S(0)ₘR₇, alkyle, halogénalkyle, -OR₈, -N=C(R₉)(R₁₀) et -C(O)alkyle;
R₅ et R₆ sont choisis indépendamment entre un atome d'hydrogène, des groupes alkyle, halogénalkyle, -C (O) alkyle, -C(O)OR₇, -S(O)ᵣCF₃ ; ou bien R₅ et R₆ forment conjointement un radical alkylène divalent qui peut être interrompu par un ou plusieurs hétéroatomes, choisis de préférence entre l'oxygène, l'azote et le soufre ;
R₇ est choisi entre des groupes alkyle et halogénalkyle ;
R₈ est choisi entre des groupes alkyle, halogénalkyle et un atome d'hydrogène;
R₉ est choisi entre un atome d'hydrogène et un groupe alkyle ;
R₁₀ est choisi entre des groupes phényle et hétéroaryle, chacun d'entre eux étant non substitué ou substitué avec un ou plusieurs substituants hydroxy, halogéno, -O-alkyle, -S-alkyle, cyano, alkyle ou leurs associations ;
X est choisi entre un atome d'azote et un groupe -C-R₁₂;
R₁₁ et R₁₂ sont choisis indépendamment entre un atome d'hydrogène, un atome d'halogène, des groupes CN et NO₂ ;
R₁₃ est choisi entre un atome d'halogène, des groupes halogénalkyle, halogénalkoxy, -S(O)_{q}CF₃ et -SF₅ ;
m, n, q et r sont choisis indépendamment entre 0, 1 et 2 ;
sous réserve que, lorsque R₁ représente un groupe méthyle, R₃ représente un groupe halogénalkyle, R₄ représente un groupe NH₂, R₁₁ représente un groupe Cl, R₁₃ représente un groupe CF₃ et X représente N, et sous réserve que, lorsque R₂ représente un groupe 4,5-dicyanoimidazole-2-yle, R₄ représente un groupe Cl, R₁₁ représente un groupe Cl, R₁₃ représente un groupe CF₃ et X représente un groupe =C-Cl.

2. Procédé suivant la revendication 1, dans lequel le charançon est *Otiorynchus sulcatus, ovatus* ou *singularis,* ou *Hylobius abietis.*

3. Procédé suivant la revendication 1 ou 2, dans lequel le 1-arylpyrazole est appliqué à un taux de 0,2 g/m³ à 5 g/m³ d'ingrédient actif par volume de milieu de croissance.

4. Procédé suivant l'une quelconque des revendications précédentes, dans lequel le milieu de croissance comprend du compost, de la tourbe ou de la terre pour mise en pot.

5. Procédé suivant l'une quelconque des revendications précédentes, dans lequel le 1-arylpyrazole est appliqué sous forme d'une composition solide en particules au milieu de croissance.

6. Procédé suivant l'une quelconque des revendications 1 à 4, dans lequel le 1-arylpyrazole est appliqué sous forme d'une composition liquide au milieu de croissance.

7. Procédé suivant l'une quelconque des revendications précédentes, dans lequel le 1-arylpyrazole est le 5-amino-1-(2,6-dichloro-4-trifluorométhylphényl)4-trifluorométhylsulfinyl-3-cyanopyrazole.
